# EUROPÄISCHE PATENTSCHRIFT

(11) **EP 1 735 188 B1**
(45) Veröffentlichungstag und Bekanntmachung des Hinweises auf die Patenterteilung: **12.12.2007**
(21) Anmeldenummer: 05733321.3
(22) Anmeldetag: 12.04.2005
(51) Int. Cl.: B60R 13/08, B62D 65/14

(54) **FUSSRAUMABDECKUNG UNTERHALB EINER INSTRUMENTENTAFEL EINES KRAFTFAHRZEUGES**
FOOTWELL COVER PANEL SITUATED BELOW AN INSTRUMENT PANEL OF A MOTOR VEHICLE
PANNEAU DE COUVERTURE POUR L'ESPACE EN RETRAIT DESTINE AUX PIEDS SITUE EN-DESSOUS DU TABLEAU DE BORD D'UN VEHICULE AUTOMOBILE

(30) Priorität: 13.04.2004 DE 102004018150
(43) Veröffentlichungstag der Anmeldung: 27.12.2006
(73) Patentinhaber: Faurecia Innenraum Systeme GmbH, 76767 Hagenbach (DE)
(72) Erfinder: GÜRICH, Gernot, 67141 Neuhofen (DE); HILGARTH, Josef, 71116 Gärtringen (DE); KANIA, Bernhard, 72351 Geislingen (DE)
(74) Vertreter: Pfenning, Meinig & Partner GbR
(86) Internationale Anmeldenummer: PCT/EP2005/003996
(87) Internationale Veröffentlichungsnummer: WO 2005/100095

(56) Entgegenhaltungen:
- DE-A1- 10 032 046
- FR-A- 2 744 978
- FR-A- 2 774 351
- PATENT ABSTRACTS OF JAPAN Bd. 013, Nr. 258 (M-838), 15. Juni 1989 (1989-06-15) & JP 01 063436 A (HONDA MOTOR CO LTD), 9. März 1989 (1989-03-09)

## Beschreibung

Die Erfindung betrifft eine Fußraumabdeckung unterhalb einer Instrumententafel eines Kraftfahrzeuges nach dem Oberbegriff des Patentanspruchs 1.

Eine Instrumententafel mit einer integrierten Fußraumabdeckung ist aus EP 0 374 975 B1 bekannt.

Eine Montage einer Instrumententafel und einer Fußraumabdeckung mit Aufnahmen für insbesondere zu verkabelnde Funktionselemente unterhalb der Instrumentental ist aus JP-A-01063436 bekannt.

In der Praxis besteht häufig das Problem, dass eine Instrumententafel mit einer vormontierten oder in diese integrierten Fußraumabdeckung mangels einer ausreichend großen Einführöffnung in die Fahrzeugkarosserie in dieser Form nicht bei der Fahrzeugmontage in das Fahrzeuginnere eingesetzt werden kann. Insbesondere aus diesem Grund wurde in solchen Fällen eine Instrumententafelausbildung gewählt, bei der die Fußraumabdeckung insbesondere auf der Fahrerseite als ein getrenntes Bauteil ausgebildet und erst nach der Montage der Instrumententafel innerhalb des Fahrzeuges mit dieser verbunden wurde. Funktionsteile, die sich in der Fußraumabdeckung üblicherweise befinden, wurden bei dieser Ausführungsform erst im Fahrzeug nach der Verbindung der Fußraumabdeckung mit dem übrigen Bereich der Instrumententafel eingesetzt. Diese Vorgehensweise ist zeit- und damit kostenaufwändig und darüber hinaus ungesund für das Montagepersonal, da innerhalb des Fahrzeugfußraumes Enge und damit montageunfreundliche Platzverhältnisse vorliegen.

Die Erfindung beschäftigt sich mit dem Problem, für eine Instrumententafel mit einer Fußraumabdeckung, die zusammen mit der Fußraumabdeckung mangels einer ausreichend großen Montageöffnung innerhalb des Fahrzeuges bisher nicht in integriertem bzw. vormontiertem Zustand eingesetzt werden konnte, montagefreundlicher zu gestalten.

Erfindungsgemäß gelöst wird dieses Problem durch eine gattungsgemäße Fußraumabdeckung mit den kennzeichnenden Merkmalen des Patentanspruchs 1,

Zweckmäßige und vorteilhafte Ausgestaltungen dieser Lösung sind Gegenstand der Unteransprüche.

Bei einer besonders vorteilhaften Ausgestaltung sind die in der Fußraumabdeckung vorzusehenden Funktionselemente bereits vormontiert, so dass die Instrumententafel einschließlich Fußraumabdeckung mit vormontierten Funktionselementen modulartig in das Fahrzeug bei dessen Montage eingesetzt werden kann.

Die Erfindung beruht auf dem allgemeinen Gedanken, bei einer Instrumententafel mit einer damit verbundenen Fußraumabdeckung, bei der dieses Gesamtbauteil zu groß für ein Einführen durch eine Montageöffnung des Fahrzeuges ist, die Fußraumabdeckung mit ausschließlich für die Montage leicht abklappbaren Bereichen zu versehen. Die abklappbaren Bereiche werden dabei genau in denjenigen Außenumfangsbereichen der Fußraumabdeckung vorgesehen, die bei einer nicht gegebenen Abklappbarkeit bei der Montage mit Bezug auf die Montageöffnung Störkanten bzw. Störbereiche bilden. Ein Störbereich kann insbesondere bei einer Fußraumabdeckung für die Fahrerseite eines Fahrzeuges an derjenigen Stelle liegen, an der die Fußraumabdeckung die Fußpedale schlitzförmig umgreift.

Die Verbindungen der klappbaren Bereiche gegenüber einem Grundkörper der Fußraumabdeckung können vorteilhafterweise Filmscharniere sein. Diese können für den Fall, dass die Fußraumabdeckung - wie gewöhnlich - aus Kunststoff besteht, aus diesem aus- oder in diesen eingeformt sein.

Um die abklappbaren Bereiche bei der Montage in jeweils einer abgeklappten Position halten zu können, können zwischen dem Grundkörper und den abklappbaren Bereichen entsprechende Rastverschlüsse vorgesehen sein, die nach erfolgter Montage der Instrumententafel einschließlich der in diese integrierten oder mit dieser verbundenen Fußraumabdeckung einfach rückgeklappt werden können. Das Rückklappen erfolgt dabei in die innerhalb des fertigen Fahrzeuges gewünschte Einbauposition der Fußraumabdeckung.

Bei der erfindungsgemäßen Ausführung der Instrumententafel, bei der die Fußraumabdeckung auf insbesondere der Fahrerseite bereits vor dem Einsetzen der Instrumententafel in die Fahrzeugkarosserie an dieser vorhanden ist, können die in dieser Fußraumabdeckung vorgesehenen Funktionselemente zusammen mit den übrigen Bestandteilen der Instrumententafel bereits außerhalb des Fahrzeuges bequem vormontiert werden.

Ein vorteilhaftes, nachfolgend noch näher erläutertes Ausführungsbeispiel ist in der zeichnung dargestellt.

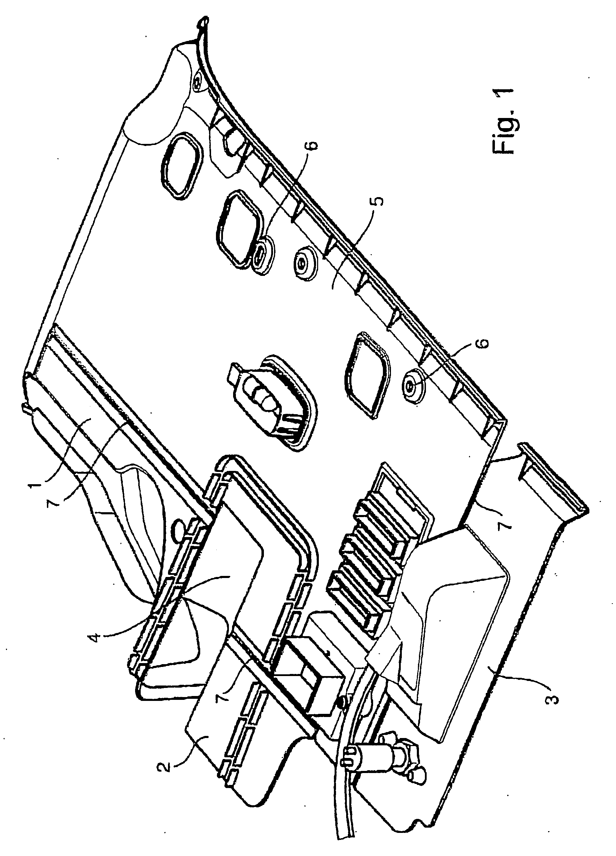

In dieser zeigt die einzige
- Fig. 1: eine perspektivische Ansicht einer an einer Instrumententafel noch außerhalb des Fahrzeuges vormontierbaren, fahrerseitigen Fußraumabdeckung.

Die mit einer Reihe von Aufnahmen für Funktionselemente versehene Fußraumabdeckung weist insgesamt drei abklappbare Bereiche 1, 2, 3 auf. Die abklappbaren Bereiche 1 und 2 bilden zwischen sich einen Schlitz 4 aus, der bei im Fahrzeug eingebautem Zustand zum Hindurchführen mindestens eines Fußpedales dient.

Die drei abklappbaren Bereiche 1, 2, 3 sind mit einem Grundkörper 5 der Fußraumabdeckung über Filmscharniere 7 verbunden. Diese Filmscharniere 7 sind in den Kunststoff, aus dem die gesamte Fußraumabdeckung besteht, eingebettet bzw. aus diesem Kunststoff ausgebildet.

In der Zeichnung ist die Fußraumabdeckung von der Motorraumseite aus gesehen dargestellt. Bei der Montage der Instrumententafel, an der die Fußraumabdeckung vormontiert ist, sind die Bereiche 1, 2, 3 zu derjenigen Seite der Fußraumabdeckung hin abgeklappt, die dem Fahrgastraum zugewandt ist. Auf dieser Seite befinden sich auch die Elemente der Rastverachlüsse, über die die abgeklappten Bereiche 1, 2, 3 an dem Grundkörper 5 während des Einsetzens der Instrumententafel zusammen mit der daran bereite befestigten Fußraumabdeckung arretiert werden können.

Die Fußraumabdeckung besitzt Befestigungslöcher, von denen einige beispielhaft mit der Bezugziffer 6 belegt sind. Über diese Befestigungslöcher 6 wird die Fußraumabdeckung einerseits an der Instrumententafel vormontiert und andererseits dient ein Teil dieser Befestigungslöcher dazu, die Fußraumabdeckung innerhalb des Fahrzeuges an dort vorhandenen Karosserieträgern noch zusätzlich zu befestigen bzw. abzustützen. Weitere Befestigungen und Abstützungen können insbesondere in den klappbaren Bereichen 1, 2, 3 dadurch erreicht werden, dass diese Bereiche zwischen in dem Fußraum vorhandene Bauelemente eingeklemmt werden.

In dem Grundkörper 5 sind eine Reihe Aufnahmen für elektrisch zu verkabelnde Funktionselemente vorgesehen und in der Zeichnung leicht erkennbar dargestellt. In dem klappbaren Bereich 3 befindet sich eine Aufnahme für einen Seilzug, mit dem die Motorhaube geöffnet werden kann.

## Patentansprüche

1. Fußraumabdeckung mit Aufnahmen für insbesondere zu verkabelnde Funktionselemente unterhalb einer instrumententafel eines Kraftfahrzeuges,
**dadurch gekennzeichnet,**
**dass** Bereiche (1, 2, 3) der Abdeckung für ein bei der Fahrzeugmontage gemeinsames Einsetzen der Instrumententafel zusammen mit der daran bereits teilweise vormontierten oder in diese integrierten Abdeckung in das Fahrzeug gegenüber einem Grundkörper (5) der Abdeckung klappbar ausgebildet sind.

2. Fußraumabdeckung nach Anspruch 1,
**dadurch gekennzeichnet,**
**dass** die Klappachsen zwischen den klappbaren Bereichen (1, 2, 3) und dem Grundkörper (5) in Filmscharnieren (7) liegen bzw. von diesen gebildet werden.

3. Fußraumabdeckung nach Anspruch 1 oder 2,
**dadurch gekennzeichnet,**
**dass** die klappbaren Bereiche (1, 2, 3) in ihrer Montageposition durch Rastverschlüsse arretierbar sind.

4. Fußraumabdeckung nach einem der vorhergehenden Ansprüche,
**dadurch gekennzeichnet,**
**dass** die Fußraumabdeckung aus Kunststoff mit in diesen ein- bzw. aus diesem ausgeformten Filmscharnieren (7) besteht.

5. Instrumententafel mit einer außerhalb des zu montierenden Fahrzeuges bereits vormontierten Fußraumabdeckung nach einem der vorhergehenden Ansprüche,
**dadurch gekennzeichnet,**
**dass** auch die in der Fußraumabdeckung anzubringenden Funktionselemente bereite vormontiert sind und nur noch mit außerhalb der Instrumententafel liegenden Anschlusselementen innerhalb des Fahrzeuges verbunden werden müssen.

## Claims

1. Foot well cover panel with take-ups, in particular for cable connections for functional elements below an instrument panel of a motor vehicle, **characterised in that** areas (1, 2, 3) of the cover panel are pre-assembled in part for installation into a vehicle together with the instrument panel, or are formed integrated into the same cover panel in a foldable way for installation into the vehicle opposite a base body (5) of the cover panel.

2. Foot well cover panel according to Claim 1, **characterised in that** the fold axis between the foldable areas (1, 2, 3) and the base body (5) lies within foil hinges (7), e.g. is formed by the same.

3. Foot well cover panel according to Claim 1 or 2, **characterised in that** the foldable areas (1, 2, 3) can be arrested by means of arresting closures in their installed position.

4. Foot well cover panel according to one of the preceding Claims, **characterised in that** the foot well cover panel is made of plastic with a foil hinges (7) inserted into, e.g. formed in the same.

5. Instrument panel with a pre-assembled foot well cover panel according to one of the preceding Claims to be installed into a vehicle, **characterised in that** the functional elements also to be installed into the foot well cover panel are also pre-assembled with the same, and need only be connected with connection points external to the instrument panel inside the vehicle.

## Revendications

1. Recouvrement de l'espace pour les pieds, avec des logements servant en particulier aux éléments fonctionnels à câbler sous un tableau de bord d'un véhicule automobile,
**caractérisé en ce,**
**que** des zones (1, 2, 3) du recouvrement sont réalisées de manière rabattable, par rapport à un corps de base (5) du recouvrement, pour une implantation commune dans le véhicule, lors du montage du véhicule, du tableau de bord avec le recouvrement qui y est déjà partiellement prémonté ou intégré.

2. Recouvrement de l'espace pour les pieds selon la revendication 1,
**caractérisé en ce**
**que** les axes de pivotement se situent entre les zones rabattables (1, 2, 3) et le corps de base (5) dans des charnières pelliculaires (7) et/ou sont formés par celles-ci.

3. Recouvrement de l'espace pour les pieds selon la revendication 1 ou 2,
**caractérisé en ce**
**que** les zones rabattables (1, 2, 3) peuvent être bloquées dans leur position de montage par des fermetures de blocage.

4. Recouvrement de l'espace pour les pieds selon l'une quelconque des revendications précédentes,
**caractérisé en ce que**
le recouvrement de l'espace pour les pieds est en plastique avec des charnières pelliculaires (7) moulées dans celui-ci et/ou formées à partir de celui-ci.

5. Tableau de bord avec un recouvrement de l'espace pour les pieds selon l'une quelconque des revendications précédentes, déjà prémonté à l'extérieur du véhicule à monter,
**caractérisé en ce**
**que** les éléments fonctionnels à installer dans le recouvrement de l'espace pour les pieds sont déjà prémontés et doivent juste encore être reliés à l'intérieur du véhicule aux éléments de raccordement se trouvant à l'extérieur du tableau de bord.
